**Europäisches Patentamt**

**European Patent Office**

**Office européen des brevets**

(11) Veröffentlichungsnummer: **0 134 478**
**B1**

(12) **EUROPÄISCHE PATENTSCHRIFT**

(45) Veröffentlichungstag der Patentschrift:
04.10.89

(21) Anmeldenummer: **84107834.8**

(22) Anmeldetag: **05.07.84**

(51) Int. Cl.⁴: **C 09 B 7/10**

(54) Verfahren zur Herstellung eines Pigments auf Basis 4,4',7,7'-Tetrachlorthioindigo.

(30) Priorität: **09.07.83 DE 3324879**

(43) Veröffentlichungstag der Anmeldung:
**20.03.85 Patentblatt 85/12**

(45) Bekanntmachung des Hinweises auf die Patenterteilung:
**04.10.89 Patentblatt 89/40**

(84) Benannte Vertragsstaaten:
**CH DE FR GB IT LI**

(56) Entgegenhaltungen:
**EP-A-0 056 868**
**DE-A-3 117 056**
**FR-A-2 300 117**
**GB-A-2 022 606**
**US-A-2 158 032**

(73) Patentinhaber: **HOECHST AKTIENGESELLSCHAFT,**
**Postfach 80 03 20, D-6230 Frankfurt am Main 80**
**(DE)**

(72) Erfinder: **Spietschka, Ernst, Dr., Kirchweg 3,**
**D-6270 Idstein/Taunus (DE)**
Erfinder: **Urban, Manfred, Steigerwaldstrasse 2A,**
**D-6200 Wiesbaden (DE)**

EP 0 134 478 B1

## Beschreibung

Die Erfindung betrifft ein Verfahren zur Herstellung eines farbstarken, flockungsstabilen und rheologisch hervorragenden Pigments auf Basis 4,4',7,7'-Tetrachlorthioindigo durch Umsetzung von 2,5-Dichlorphenylthioglykolsäurechlorid mit Friedel-Crafts-Katalysatoren in Gegenwart anorganischer Säurehalogenide mittlerer Wertigkeitsstufe als Verdünnungsmittel, Oxidation des hierbei erhaltenen 4,7-Dichlor-3-oxthionaphthens zum 4,4',7,7'-Tetrachlorthioindigo-Rohpigment nach bekannten Verfahren und dessen Überführung in das Pigment mit den vorstehend genannten wertvollen Eigenschaften durch Behandlung des feuchten Rohpigments mit aromatischen Lösemitteln in Gegenwart einer wäßrigen Lösung eines Alkalihydroxids, von Ammoniak, eines quaternären Ammoniumsalzes oder eines Alkalicarbonats bei höheren Temperaturen.

4,4',7,7'-Tetrachlorthioindigo ist bekanntlich ein technisch wichtiges Produkt, wobei für seine technische Synthese 4,7-Dichlor-3-oxythionaphthen bevorzugtes Ausgangsprodukt ist. In der Literatur werden verschiedene Verfahren zur Herstellung dieses Ausgangsproduktes beschrieben:

a) Umsetzung von 2,5-Dichlorphenylthioglykolsäurechlorid mit Aluminiumhalogeniden in organischen Lösungsmitteln als Verdünnungsmittel (US-PS-2 158 032 und 2 914 539), die nach Zersetzung der Aluminiumkomplexverbindungen wieder regeneriert werden müssen, um den Auflagen zur Vermeidung von Umweltverschmutzung Rechnung zu tragen.

b) Versetzen von 2,5-Dichlorphenyl-thioglykolsäurehalogeniden mit Aluminiumchlorid in Abwesenheit eines Verdünnungsmittels (DE-PS-197 162). Wegen der schwer kontrollierbaren Reaktionsführung und der durch örtliche Überhitzung an der Zugabestelle entstehenden Zersetzungsprodukte ist dieses Verfahren nur schwer durchführbar; es wird 4,7-Dichlor-3-oxythionaphthen mit nur niedrigem Reinheitsgrad in nur mäßiger Ausbeute erhalten.

c) Cyclisierung von Thionylchlorid-freiem 2,5-Dichlorphenylthioglykolsäurechlorid in einer Schmelze aus Aluminiumchlorid, Schwefeldioxid und Natriumchlorid als Verdünnungsmittel (DE-OS-2 825 313). Dieses Verfahren ist mit dem Nachteil behaftet, daß zur Entfernung oder Rückgewinnung des Schwefeldioxids besondere apparative Maßnahmen erforderlich sind, die kostenaufwendig sind.

Aus den angegebenen Gründen sind diese bekannten Verfahren zur Herstellung des Ausgangsproduktes (4,7-Dichlor-3-oxythionaphthen) nicht befriedigend.

Die Überführung des 4,7-Dichlor-3-oxythionaphthens in das rohe 4,4',7,7'-Tetrachlorthioindigo kann nach bekannten Oxidationsverfahren erfolgen:

1) Oxidation mittels Natriumpolysulfid (US-PS-2 158 032).

2) Oxidation mittels Luft, Eisen(II)-chlorid, Kaliumcyanoferrat(III) oder Kaliumdichromat (DE-PS-194 237).

3) Oxidation mit den Alkalisalzen aromatischer Nitrosulfonsäuren (DE-OS-3 101 883).

4) Oxidation mittels Peroxidisulfat in wäßrigalkalischer Lösung (DE-PS-2 504 935).

5) Oxidation in wäßrig-alkalischem Medium mittels Luft in Gegenwart von Kupfer(II)-Salz (DE-OS-2 825 313, Beispiel 1).

Die Überführung von nach bekannten Verfahren (DE-PS-2 504 935 und DE-OS-3 101 883) erhaltenen Rohpigmenten von 4,4',7,7'-Tetrachlorthiondigo in Pigmentform kann nach in den vorstehend zitierten beiden Literaturstellen gemachten Angaben u.a. durch eine Behandlung mit organischen Lösemitteln, wie niederen Alkanolen, aliphatischen Ketonen, Carbonsäureestern oder aromatischen Kohlenwasserstoffen erfolgen.

Es wurde nun überraschenderweise gefunden, daß man unter Vermeidung der Nachteile der bekannten Verfahren zur Herstellung des 4,7-Dichlor-3-oxythionaphthens (wie vorstehend beschrieben) ein farbstarkes, flockungsstabiles und rheologisch hervorragendes 4,4',7,7'-Tetrachlorthioindigo-Pigment mit guter Ausbeute und in hohem Reinheitsgrad herstellen kann, in dem man 2,5-Dichlorphenylthioglykolsäurechlorid mit Friedel-Crafts-Katalysatoren in anorganischen Säurehalogeniden mittlerer Wertigkeitsstufe als Verdünnungsmittel bei Temperaturen von -20° bis +50°C, vorzugsweise 0° - 30°C, umsetzt, das hierbei erhaltene 4,7-Dichlor-3-oxythionaphthen nach bekannten Verfahren zum 4,4',7,7'-Tetrachlorthioindigo-Rohpigment oxidiert und letzteres in feuchter Form durch Behandeln mit einem aromatischen Lösemittel, vorzugsweise mit einem Nitroaromaten, in Gegenwart einer wäßrigen Lösung eines Alkalihydroxids, von Ammoniak, eines quaternären Ammoniumsalzes oder eines Alkalicarbonats und einer oberflächenaktiven Verbindung bei Temperaturen von 80° - 180° in das Pigment mit den wertvollen Eigenschaften überführt.

Bei der ersten Reaktionsstufe (Herstellung des 4,7-Dichlor-3-oxythionaphthens) sind geeignete Friedel-Crafts-Katalysatoren beispielsweise Aluminiumchlorid und Aluminiumbromid. Als anorganische Säurehalogenide mittlerer Wertigkeitsstufe werden vorzugsweise Thionylchlorid oder Phosphortrichlorid eingesetzt. Das Verfahren der ersten Stufe hat den Vorteil, daß ohne Zusatz eines Salzes und organischen Lösemittels, lediglich unter Anwendung eines Minimums an Aluminiumhalogenid und mit nur in geringer Menge anfallendem Schwefeldioxid gearbeitet wird. Ein weiterer Vorteil liegt in der einfachen Arbeitsweise, insbesondere bei Anwendung von Thionylchlorid als Verdünnungsmittel, welches bereits bei der Herstellung des als Vorprodukt dienenden 2,5-Dichlorphenylthioglykolsäurechlorids eingesetzt wird und bei der Weiterverarbeitung der letztgenannten Verbindung zum 4,7-Dichlor-3-oxythionaphthen (gemäß dem erfindungsgemäßen Verfahren, erste Stufe) nicht in einer gesonderten Verfahrensstufe destillativ entfernt werden muß.

Eine bevorzugte Ausführungsform der ersten Reaktionsstufe besteht darin, daß man 1 Mol 2,5-Dichlorphenylthioglykolsäurechlorid (ggfs. zusammen mit dem von der Synthese dieser Verbindung her noch vorhandenen Thionylchlorid) bei 0° - 15°C in eine Lösung bzw. Suspension von 1,2 bis 1,4 Mol Aluminiumchlorid in 3 - 12 Mol, vorzugsweise 3 - 5 Mol Thionylchlorid zutropfen läßt. Nach beendeter Umsetzung wird das Reaktionsgemisch in Eiswasser gegeben, wobei die gebildete Aluminiumkomplexverbindung zersetzt wird, und das entstandene 4,7-Dichlor-3-oxythionaphthen kann dann erfindungsgemäß weiter umgesetzt werden zum 4,4',7,7'-Tetrachlorthioindigo-Rohpigment. Es kann aber auch so gearbeitet werden, daß man das 2,5-Dichlorphenylthioglykolsäurechlorid vorlegt und die Lösung bzw. Suspension des Aluminiumchlorids in Thionylchlorid unter Wahrung der vorstehend genannten molaren Mengenverhältnisse bei 0° - 15°C zutropfen läßt und im übrigen, wie vorstehend beschrieben, weiterarbeitet.

In Abhängigkeit von der Reaktionsführung und der Zersetzungstemperatur des Reaktionsprodukts kann das auf dem vorstehend beschriebenen Wege erhaltene 4,7-Dichlor-3-oxythionaphthen geringe Mengen 4,4',7,7'-Tetrachlorthioindigo enthalten, von dem es durch Lösen in der wäßrigen Lösung eines Alkalihydroxids bzw. von Ammoniumhydroxid, Abfiltrieren von ungelöstem 4,4',7,7'-Tetrachlorthioindigo und Wiederausfällen durch Ansäuern getrennt werden kann. Für die Überführung des 4,7-Dichlor-3-oxythionaphthens in das 4,4',7,7'-Tetrachlorthioindigo-Pigment ist ein Gehalt an bereits entstandenem 4,4',7,7'-Tetrachlorthioindigo nicht störend und ein Reinigungsschritt der vorstehend genannten Art daher nicht erforderlich.

Die Überführung des 4,7-Dichlor-3-oxythionaphthens in das 4,4',7,7'-Tetrachlorindigo-Rohpigment (zweite Stufe des Verfahrens) erfolgt nach einem der bekannten, weiter oben angegebenen Oxidationsverfahren.

Bei der Umwandlung des feuchten 4,4',7,7'-Tetrachlorthioindigo-Rohpigments (dritte Stufe des Verfahrens) in das wertvolle Pigment kommen als aromatische Lösemittel beispielsweise Chlorbenzol, o-Dichlorbenzol, 1,2,4-Trichlorbenzol, Brombenzol, Toluol, Nitrotoluol, Xylol und Nitrophenol, insbesondere aber Nitrobenzol in Frage. Geeignete wäßrige Alkalilösungen sind die wäßrigen Lösungen von Alkalihydroxiden, wie Natrium- und Kaliumhydroxid, ferner von Ammoniak, quaternären Ammoniumsalzen sowie von Alkalicarbonaten, wie Natrium- oder Kaliumcarbonat. Bevorzugt wird eine wäßrige Lösung von Natriumhydroxid eingesetzt.

Das aromatische Lösemittel wird zweckmäßigerweise in der 0,1 bis 5-fachen, vorzugsweise in der 0,25- 2-fachen Gewichtsmenge, bezogen auf das zu behandelnde Rohpigment, angewandt. Alkali wird zweckmäßigerweise in der 4 bis 12-fachen, vorzugsweise 6 bis 8-fachen Menge, bezogen auf festes Alkali und bezogen auf das zu behandelnde Rohpigment, eingesetzt, wobei das Alkali in Form einer 0,1 - 10 gewichtsprozentigen, vorzugsweise 2,5 - 7,5 gewichtsprozentigen wäßrigen Lösung zur Anwendung gelangt.

Die Behandlung des Rohpigments mit dem aromatischen Lösemittel in Gegenwart von wäßrigem Alkali wird in Anwesenheit von 0,1 - 10 Gewichtsprozent, vorzugsweise 0,5 - 5 Gewichtsprozent einer oberflächenaktiven Verbindung, bezogen auf das Rohpigment, vorgenommen.

An oberflächenaktiven Verbindungen kommen nichtionogene, kationaktive und insbesondere anionaktive Verbindungen in Betracht. Geeignete oberflächenaktive Verbindungen sind folgende:

a) Nichtionogene Verbindungen, wie Fettalkoholpolyglykoläther, Fettalkoholpolyglykolester oder Alkylphenolpolyglykoläther.

b) Kationaktive Verbindungen, wie Ammoniumsalze, Ammoniumhydroxide, Fettaminoxäthylate, Fettaminpolyglykoläther oder basische Kolophoniumderivate.

c) Anionaktive Verbindungen, wie Fettsäuretauride, Fettsäure-N-methyltauride und Fettsäureisothionate, Alkylnaphthalinsulfonate, Alkylphenylsulfonate, Alkylphenolpolyglykoläthersulfate, Fettalkoholpolyglykoläthersulfate sowie insbesondere Seifen und Harze, d.h. Alkalimetallsalze von Fettsäuren, Naphthensäuren und Harzsäuren sowie modifizierte Kolophonium-maleinatharze oder Kolophonium-Fumarsäureharze.

Eine bevorzugte Durchführung der Überführung des Rohpigments in das wertvolle Pigment (dritte Stufe des Gesamtverfahrens) besteht darin, daß man den durch Oxidation des 4,7-Dichlor-3-oxythionaphthens erhaltenen feuchten Presskuchen des Rohpigments mit der etwa siebenfachen Gewichtsmenge einer wäßrigen 5 %-igen Natronlauge verrührt, dann 5 % Harzseife und die 1-fache Gewichtsmenge Nitrobenzol zugibt, 3 Stunden auf 100°C erhitzt, anschließend das Nitrobenzol abdestilliert und das Pigment abfiltriert, neutral wäscht und trocknet.

**Beispiel 1**

a) Ringschluß:

In 200 g vorgelegtes Thionylchlorid werden 70 g Aluminiumchlorid (wasserfrei) eingetragen. Nach Zutropfen von 102 g 2,5-Dichlorphenylthioglykolsäurechlorid bei 0 - 5°C innerhalb von 10 Minuten wird 4 Stunden bei 0 - 5°C nachgerührt.

Anschließend wird die Reaktionsmischung auf eine Mischung aus 2400 g Eis und 800 ml Wasser gegossen und in die erhaltene Mischung 1 Stunde Stickstoff eingeleitet. Dann wird abgesaugt, neutral gewaschen und bei 50°C im Vakuum getrocknet.

Man erhält 86,8 g 92,6 %-iges 4,7-Dichlor-3-oxythionaphthen.

b) Oxydation (gemäß (DE-PS 2 504 935) :

66,1 g 4,7-Dichlor-3-oxythionaphthen werden bei Raumtemperatur in 260,8 g 7 %-iger Natronlauge gelöst. In die erhaltene Lösung läßt man in 3 Stunden bei Raumtemperatur eine Lösung aus 148 g Wasser, 38,1 g Natronlauge 33 %-ig und 73,3 g Natriumperoxodisulfat zutropfen. Dann wird 1 Stunde bei Raumtemperatur nachgerührt und anschließend das Rohpigment abgesaugt und neutral gewaschen.

c) Finish:

Der Preßkuchen des Rohpigments wird mit Wasser auf 436,6 g Gesamtgewicht eingestellt. Dann werden nacheinander 60 g Natronlauge 33 %-ig, 6 g Harzseife 50 %-ig und 60 g Nitrobenzol zugegeben. Anschließend erhitzt man 3 Stunden auf 100°C, destilliert dann das Nitrobenzol mit Wasserdampf ab, saugt ab, wäscht neutral und trocknet bei 80°C.

Man erhält 60,0 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 2**

a) Ringschluß:

In 400 g vorgelegtes Thionylchlorid werden 70 g Aluminiumchlorid (wasserfrei) eingetragen. Nach Zutropfen von 102 g 2,5-Dichlorphenylthioglykolsäurechlorid bei 0 - 5°C innerhalb von 10 Minuten wird 1 Stunde bei 0 - 5°C nachgerührt. Anschließend wird die Reaktionsmischung auf eine Mischung aus 2400 g Eis und 800 ml Wasser gegossen und in die erhaltene Mischung 1 Stunde Stickstoff eingeleitet. Dann wird abgesaugt, neutral gewaschen und bei 50°C im Vakuum getrocknet.

Man erhält 87,2 g 90,9 %-iges 4,7-Dichlor-3-oxythionaphthen.

b) Oxidation: Diese erfolgt wie in Beispiel 1b) beschrieben.

c) Finish: Dieser wird wie in Beispiel 1c) beschrieben vorgenommen.

Man erhält 59,6 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 3**

a) Ringschluß:

In 200 g vorgelegtes Thionylchlorid werden 70 g Aluminiumchlorid (wasserfrei) eingetragen. Nach Zutropfen von 102 g 2,5-Dichlorphenylthioglykolsäurechlorid bei 40°C innerhalb von 10 Minuten wird 1 Stunde bei 40°C nachgerührt. Anschliessend wird die Reaktionsmischung auf eine Mischung aus 2400 g Eis und 800 ml Wasser gegossen und in die erhaltene Mischung 1 Stunde Stickstoff eingeleitet. Dann wird abgesaugt, neutral gewaschen und bei 50°C im Vakuum getrocknet. Man erhält 91,4 g 90,9 %-iges 4,7-Dichlor-3-oxythionaphthen.

b) Oxydation: Diese erfolgt wie in Beispiel 1b) beschrieben.

c) Finish: Dieser wird wie in Beispiel 1c) beschrieben, vorgenomen.

Man erhält 59,5 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 4**

a) Ringschluß:

94,8 g 2,5-Dichlorphenylthioglykolsäure werden in 103,2 g Thionylchlorid eingetragen. Nach Zugabe von 0,24 g N-Methylpyrrolidon wird 2 Stunden auf 50°C geheizt und auf 0°C abgekühlt. Bei dieser Temperatur läßt man anschließend das gebildete 2,5-Dichlorphenylthioglykolsäurechlorid innerhalb 1 Stunde in eine Suspension aus 160 g Thionylchlorid und 77,2 g Aluminiumchlorid wasserfrei zutropfen. Nach 1-stündigem Nachrühren bei 0 - 5°C gießt man die Suspension auf eine Mischung aus 1200 g Eis und 800 ml Wasser, rührt dann 1 Stunde bei 80°C nach, saugt ab, wäscht neutral und trocknet bei 50°C im Vakuum.

Man erhält 88,4 g 94,5 %-iges 4,7-Dichlor-3-oxythionaphthen.

b) Oxydation: Diese erfolgt wie in Beispiel 1b) beschrieben.

c) Finish: Dieser wird wie in Beispiel 1c) beschrieben vorgenommen.

Man erhält 60,1 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 5**

a) Ringschluß: Dieser erfolgt wie in Beispiel 1a) beschrieben.

b) Oxydation (gemäß DE-OS-2 825 313, Beispiel 1):

Nach Eintragen von 72 g 4,7-Dichlor-3-oxythionaphthen in eine Lösung aus 748 g entsalztem Wasser und 150 g Natronlauge 33 %-ig wird auf 80°C geheizt, dann eine Lösung von 2 g Kupfersulfat krist. in 10 g Wasser zugegeben, bis zur vollständigen Oxydation Luft eingeleitet, heiß abgesaugt und neutral gewaschen.

c) Finish: Dieser wird wie in Beispiel 1c) beschrieben vorgenommen.

Man erhält 60,4 g Pigment, das sich hervorragend zum Färben von Lacken und plastischen Massen eignet und deckender und blauer ist als das gemäß Beispiel 1 erhaltene Pigment.

**Beispiel 6**

a) Ringschluß: Dieser erfolgt wie in Beispiel 1a) beschrieben.

b) Oxydation (gemäß DE-OS-3 101 883):

72 g 4,7-Dichlor-3-oxythionaphthen werden in eine Lösung aus 230 g Wasser und 100 g Natronlauge 33 %-ig eingetragen und gelöst. Nach Zugabe von 36 g 3-nitrobenzolsulfonsaurem Natrium wird 2 Stunden auf 60°C geheizt, abgesaugt und neutral gewaschen.

c) Finish: Dieser erfolgt wie in Beispiel 1c) beschrieben.

Man erhält 53,6 g Pigment, das sich hervorragend eignet zum Färben von Lacken und plastischen Massen und dunkler und blauer ist als das gemäß Beispiel 1 erhaltene Pigment.

**Beispiel 7**

a) Ringschluß: Dieser erfolgt wie in Beispiel 1a) beschrieben.

b) Oxydation (gemäß DE-PS-194 237):

72 g 4,7-Dichlor-3-oxythionaphthen werden in eine Lösung aus 420 g Wasser und 182 g Natronlauge 33 %-ig eingetragen und gelöst. Dann läßt man bei 15 - 20°C in 5 Stunden 1650 g 10 %-ige Kaliumferricyanidlösung zutropfen. Anschließend wird abgesaugt und neutral gewaschen.

c) Finish: Dieser wird in Beispiel 1c) beschrieben vorgenommen.

Man erhält 60,8 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 8**

a) Ringschluß: Dieser erfolgt wie in Beispiel 1a) beschrieben.

b) Oxydation (gemäß US-PS-2 158 032):

Nach Eintragen von 28,8 g 4,7-Dichlor-3-oxythionaphthen in eine Lösung aus 1400 g Wasser und 140 g Natronlauge 33 %-ig wird auf 80°C geheizt. Dann läßt man bei dieser Temperatur 113,5 g 45 %-ige Natriumpolysulfidlösung zutropfen. Anschließend rührt man 1 Stunde bei 80°C nach, saugt das Rohpigment ab und wäscht dieses neutral.

c) Finish: Dieser erfolgt wie in Beispiel 1c) beschrieben.

Man erhält 24,2 g Pigment, das sich hervorragend zum Färben von Lacken und plastischen Massen eignet und dunkler und blauer ist als das gemäß Beispiel 1 erhaltene Pigment.

**Beispiel 9**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 30 g Natronlauge 33 %-ig, 6 g Harzseife 50 %-ig und 60 g Nitrobenzol zugegeben. Anschließend erhitzt man 3 Stunden auf 100°C, destilliert das Nitrobenzol mit Wasserdampf ab, saugt ab, wäscht neutral und trocknet bei 80°C.

Man erhält 59,4 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 10**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 90 g Natronlauge 33 %-ig, 6 g Harzseife 50 %-ig und 60 g Nitrobenzol zugegeben. Nach 3-stündigem Erhitzen auf 100°C wird das Nitrobenzol mit Wasserdampf abdestilliert. Dann wird der Niederschlag abgesaugt, neutral gewaschen und bei 80°C getrocknet.

Man erhält 58,6 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 11**

a) Ringschluß: Dieser erfolgt gemäß Beispiel 1a).

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 60 g Natronlauge 33 %-ig, 1 g Harzseife 50 %-ig und 60 g Nitrobenzol zugegeben. Nach 3-stündigem Erhitzen auf 100°C destilliert man das Nitrobenzol mit Wasserdampf ab. Dann saugt man den Niederschlag ab, wäscht neutral und trocknet bei 80°C.

Man erhält 58,3 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 12**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 60 g Natronlauge 33 %-ig, 6 g Harzseife 50 %-ig und 15 g Nitrobenzol zugegeben. Nach 3-stündigem Erhitzen auf 100°C, destilliert man das Nitrobenzol mit Wasserdampf ab, saugt ab, wäscht neutral und trocknet bei 80°C.

Man erhält 58,4 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 13**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 60 g Natronlauge 33 %-ig, 6 g Harzseife 50 %-ig und 180 g Nitrobenzol zugegeben. Nach 3-stündigem Erhitzen auf 100°C destilliert man das Nitrobenzol mit Wasserdampf ab, saugt ab, wäscht neutral und trocknet bei 80°C.

Man erhält 56,2 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 14**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 60 g Natronlauge 33 %-ig, 6 g Harzseife 50 %-ig und 60 g Nitrobenzol zugegeben. Nach Erhitzen zum Sieden auf 100°C destilliert man das Nitrobenzol sofort mit Wasserdampf ab, saugt ab, wäscht neutral und trocknet bei 80°C.

Man erhält 58,4 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet.

**Beispiel 15**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt. Dann werden nacheinander 60 g Natronlauge 33 %-ig, 6 g Harzseife 50 %-ig und 60 g Nitrobenzol zugegeben. Anschließend erhitzt man im Autoklav 3 Stunden auf 125°C, destilliert Nitrobenzol mit Wasserdampf ab, saugt ab, wäscht neutral und trocknet bei 80°C.

Man erhält 55,7 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet und deckender ist als das gemäß Beispiel 1 erhaltene Pigment.

**Beispiel 16**

a) Ringschluß: Dieser erfolgt wie in Beispiel 1a) beschrieben.

b) Oxydation: Diese wird wie in Beispiel 1b) beschrieben vorgenommen.

c) Finish:

Der Preßkuchen des Rohpigments wird mit Wasser auf 436,6 g Gesamtgewicht eingestellt.

Dann werden nacheinander 60 g Natronlauge 33 %-ig, 6 g Harzseife 50 %-ig und 60 g Nitrobenzol zugegeben. Nach 3-stündigem Erhitzen auf 100°C destilliert man das Nitrobenzol mit Wasserdampf ab, kühlt auf 25°C ab, gibt 47,6 g Chlorlauge zu und rührt bei 25°C nach bis die Chlorlauge verbraucht ist. Anschließend saugt man ab, wäscht neutral und trocknet bei 80°C.

Man erhält 55,9 g Pigment, das sich hervorragend zum Färben von Lacken und plastischen Massen eignet und sich insbesondere durch seine hohe Farbstärke, sein gutes rheologisches Verhalten und seine Flockungsstabilität in Lacken auszeichnet und röter ist als das nach Beispiel 1 erhaltene Pigment.

**Patentansprüche**

1. Verfahren zur Herstellung eines farbstarken, flockungsstabilen und rheologisch hervorragenden 4,4',7,7'-Tetrachlorthioindigo-Pigments mit guten Ausbeuten und in hohem Reinheitsgrad dadurch gekennzeichnet, daß man
a) 2,5-Dichlorphenylthioglykolsäurechlorid mit Friedel-Crafts-Katalysatoren in anorganischen Säurehalogeniden mittlerer Wertigkeitsstufe als Verdünnungsmittel bei Temperaturen von -20° bis +50°C zum 4,7-Dichlor-3-oxythionaphthen umsetzt,
b) das erhaltene 4,7-Dichlor-3-oxythionaphthen in bekannter Weise zum rohen 4,4',7,7'-Tetrachlorthioindigo oxidiert, und
c) das erhaltene rohe 4,4',7-,7'-Tetrachlorthioindigo in feuchter Form mit einem aromatischen Lösemittel in Gegenwart einer wäßrigen Lösung eines Alkalihydroxids, von Ammoniak, eines quaternären Ammoniumsalzes oder eines Alkalicarbonats und einer oberflächenaktiven Verbindung bei Temperaturen von 80° - 180° behandelt.

2. Verfahren nach Anspruch 1a), dadurch gekennzeichnet, daß man als Friedel-Crafts-Katalysator Aluminiumchlorid oder Aluminiumbromid und als Säurehalogenid mittlerer Wertigkeitsstufe (Verdünnungsmittel) Thionylchlorid oder Phosphortrichlorid einsetzt und die Umsetzung bei einer Temperatur von 0° bis 30°C vornimmt.

3. Verfahren nach Anspruch 1a) oder 2, dadurch gekennzeichnet, daß man 1 Mol 2,5-Dichlorphenylthioglykolsäurechlorid bei 0° - 15°C mit einer Lösung bzw. Suspension von 1,2 bis 1,4 Mol Aluminiumchlorid in 3 - 5 Mol Thionylchlorid zur Umsetzung bringt.

4. Verfahren nach Anspruch 1c), dadurch gekennzeichnet, daß man als aromatisches Lösemittel Chlorbenzol, o-Dichlorbenzol, 1,2,4-Trichlorbenzol, Brombenzol, Toluol, Nitrotoluol, Xylol, Nitrophenol oder Nitrobenzol, als wäßrige Alkalilösung eine wäßrige Lösung von Natriumhydroxid, Kaliumhydroxid, Natriumcarbonat oder Kaliumcarbonat, und als oberflächenaktive Verbindung eine nichtionogene, kationaktive oder anionaktive Verbindung einsetzt.

**Claims**

1. A process for preparing a strong, non-flocking and rheologically excellent 4,4',7,7'-tetrachlorothioindigo pigment in high yields and high purity, which comprises
a) reacting 2,5-dichlorophenylthioglycoloyl chloride with Friedel-Crafts catalysts in inorganic acid halides of medium valence state as diluent at temperatures of -20° to +50°C to 4,7-dichloro-3-oxythionaphthene,
b) oxidizing the resulting 4,7-dichloro-3-oxythionaphthene in a known manner to crude 4,4',7,7'-tetrachlorothioindigo, and
c) treating the crude 4,4',7,7'-tetrachlorothioindigo obtained in moist form with an aromatic solvent at temperatures of 80° to 180°C in the presence of an aqueous solution of an alkali metal hydroxide, of ammonia, of a quarternary ammonium salt or of an alkali metal carbonate and of a surface-active compound.

2. The process as claimed in claim 1a), wherein the Friedel-Crafts catalyst used is aluminum chloride or aluminum bromide, and the acid halide of medium valence state (diluent) is thionyl chloride or phosphorus trichloride, and the reaction is carried out at a temperature of 0° to 30°C.

3. The process as claimed in claim 1a) or 2, wherein 1 mole of 2,5-dichlorophenylthioglycoloyl chloride is reacted at 0° - 15°C with a solution or suspension of 1.2 to 1.4 moles of aluminum chloride in 3 - 5 moles of thionyl chloride.

4. The process as claimed in claim 1c), wherein the aromatic solvent is chlorobenzene, o-dichlorobenzene, 1,2,4-trichlorobenzene, bromobenzene, toluene, nitrotoluene, xylene, nitrophenol or nitrobenzene, the aqueous alkali solution is an aqueous solution of sodium hydroxide, potassium hydroxide, sodium carbonate or potassium carbonate, and the surface-active compound is a non-ionic, cationic or anionic compound.

**Revendications**

1. Procédé pour la préparation d'un pigment tétrachloro-4,4',7,7' thio-indigo, à fort pouvoir colorant, stable à la floculation et présentant d'excellentes propriétés rhéologiques, avec de bons rendements et avec un degré élevé de pureté, caractérisé en ce que
a) on fait réagir du chlorure de l'acide dichloro-2,5 phénylthioglycolique avec des catalyseurs de Friedel-Crafts dans des halogénures d'acides inorganiques de valence moyenne servant de diluants, à des températures de -20 à +50°C, pour obtenir le dichloro-4,7 oxy-3 benzo[b]thiophène,
b) on oxyde d'une manière connue le dichloro-4,7 oxy-3 benzo[b]thiophène obtenu en le tétrachloro-4,4',7,7' thioindigo brut, et

c) on traite le tétrachloro-4,4',7,7' thio-indigo brut obtenu, sous forme humide, avec un solvant aromatique en présence d'une solution aqueuse d'un hydroxyde de métal alcalin, d'ammoniaque, d'une solution aqueuse d'un sel d'ammonium quaternaire ou d'un carbonate de métal alcalin et d'un composé surfactif, à des températures de 80 - 180°C.

2. Procédé selon la revendication 1a), caractérisé en ce qu'on utilise comme catalyseur de Friedel-Crafts du chlorure d'aluminium ou du bromure d'aluminium et, en tant qu'halogénure d'acide de valence moyenne (diluant), du chlorure de thionyle ou du trichlorure de phosphore, la réaction étant mise en oeuvre à une température de 0 à 30°C.

3. Procédé selon la revendication 1a) ou 2, caractérisé en ce qu'on met à réagir à 0 - 15°C 1 mole du chlorure de l'acide dichloro-2,5 phénylthioglycolique avec une solution ou une suspension de 1,2 à 1,4 moles de chlorure d'aluminium dans 3 - 5 moles de chlorure de thionyle.

4. Procédé selon la revendication 1c), caractérisé en ce qu'on utilise comme solvant aromatique du chlorobenzène, de l'orthodichlorobenzène, du trichloro-1,2,4 benzène, du bromobenzène, du toluène, du nitrotoluène, du xylène, du nitrophénol ou du nitrobenzène; en tant que solution aqueuse d'un métal alcalin une solution aqueuse d'hydroxyde de sodium, d'hydroxyde de potassium, de carbonate de sodium ou de carbonate de potassium; et comme composé surfactif un composé non-ionique, cationique ou anionique.